# EUROPEAN PATENT SPECIFICATION

(11) **EP 0 910 855 B1**
(45) Date of publication and mention of the grant of the patent: **09.05.2001**
(21) Application number: 97933949.6
(22) Date of filing: 09.07.1997
(51) Int. Cl.: H01B 3/18, H01B 3/28

(54) **ELECTRIC CABLE**
ELEKTRISCHE KABEL
CABLE ELECTRIQUE

(30) Priority: 12.07.1996 SE 9602763
(43) Date of publication of application: 28.04.1999
(73) Proprietor: AB ELECTROLUX, 105 45 Lilla Essingen (Stockholm) (SE)
(72) Inventor: TORNMALM, Gunnar, S-118 23 Stockholm (SE)
(74) Representative: Onn, Thorsten
(86) International application number: SE9701251
(87) International publication number: WO9802889

(56) References cited:
- EP-A- 0 120 382
- EP-A- 0 212 645
- DE-A- 2 943 236
- DE-A- 19 504 332
- DK-B- 144 839
- US-A- 5 091 453

## Description

The present invention relates to an electric cable with improved features and especially an electric cable or cord for household machines complying with the regulations for connecting cords and simultaneously providing good mechanical properties, especially good flexibility and not containing any halogen-containing materials. Furthermore, cord according to the invention will be available at a low price.

Cords for electric household machines are in use exposed to heavy stresses and must comply with a number of regulations, which in some cases are contradictory to each other. Their insulation should thus comply with the international standards for flexible electric cables regarding electric properties, heat resistance, flame resistance, strength and flexibility, etc. e.g. according to IEC 227. Moreover, the insulating material should be available at a low price. A further circumstance becoming recently more and more important is that the insulating material should be easily recovered from cable scrap.

One of the most commonly used insulating materials has been polyvinyl chloride (PVC) of various kinds and with various additives to achieve the required features. The PVC insulation has proven to comply well with the existing standards at an attractive price level.

However, the use of PVC for a cable insulation is not without some objections. When heated strongly, e.g. during a fire, the PVC is thermally decomposed creating i.a. hydrochloric acid gas with heavily corrosive properties. The formed hydrochloric acid gas may provoke heavy corrosion damage, especially on sensitive apparatus such as computers, and there are cases where in a fire, the corrosion damage has been more costly than the damage from the fire as such. Moreover, there is during a fire a risk that PVC may under certain circumstances form heavily toxic compounds such as chlorinated dioxines and benzofuranes.

Furthermore, other halogen-containing materials have sometimes been used as flame protective means in cable insulations such as certain compounds containing bromine. In a fire, also these compunds form very undesirable halogen compounds.

Another disadvantage of the halogen-containing materials is that they can be difficult to recover for re-use.

Thus, it has recently been tried to avoid the use of PVC and other halogen-containing materials for cable insulation, but difficulties have been met to preserve the required features according to the standards without rising costs or other disadvantages. Halogen-free materials complying with the standards are known in the art, but some of them, such as cross-linked plastic materials are too expensive to be used on a large scale. Other materials such as polyurethanes cannot easily be recovered. At present, there exists no other already known material or material combination complying with the applicable standards and being simultaneously halogen-free and having a low price.

The present invention removes this disadvantage and provides an electric cable or cord complying with the applicable European standards for connecting cables of PVC, but not containing any halogen materials. Simultaneously the cord has a good flexibility and wear resistance and is made from a material which can be provided at a low cost.

### Short description of the invention

According to the invention there is provided an electric cable comprising at least one conductor provided with an insulation and enclosed by a sheath of a polymeric material. The invention is characterized in that the sheath consists of an inner and an outer sheath layer, the inner sheath layer consisting of at least one halogen-free and flexible, thermoplastic ethylene copolymer which contains a silicone rubber and an inorganic fire-retarding filler and the outside sheath layer consisting of a cross-linked thermoplastic polymer which is a halogen-free, heat and wear resistant polymer based on ethylene and/or propylene.

The positive features of the cable are obtained by the division of its sheath into two concentric sheath layers, each having optimal properties. The inside sheath layer provides the flexibility, whereas the outside sheath layer provides for the necessary wear and temperature resistance. Preferably the combined sheath is made by coextrusion of the two layers over the insulated conductor or conductors.

It is surprising for a person skilled in the art that by dividing the sheath into two sheath layers and by the choice of specific halogen-free polymer materials according to the invention, one can provide an electric cable or cord which complies with all the existing standards and simultaneously has a low price. Previously known material combinations have not been able to comply with the standards or have required specific expensive polymeric materials. The material according to the invention also has advantageous features as to manufacturing, e.g. a good extrudibility.

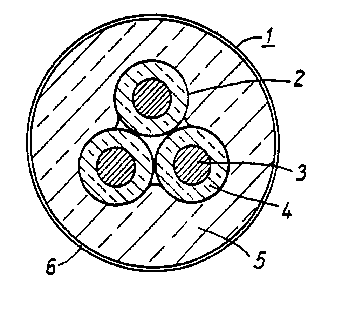

The enclosed drawing shows an embodiment of an electric cable or cord according to the invention.

### State of the art

US-A-5,091,453 describes a fire-retarding polymeric composition which is essentially free of halogen compounds and is suitable to be used in electric cables. The composition comprises an ethylene copolymer, a silicon rubber and an inorganic filler. This document, however, is not stating anything about arranging a cable with a sheath in several layers and to adjust the composition of each of the layers so that the cable in its whole is provided with an optimal combination of the desired features.

From DE-A1-3,606,683, DE-A1-2,943,236, SE-B-464,436, DK-B-144,839 and EP-A-0-212,645, various embodiments of electric cables or cords are known with a sheath provided in two concentric layers to achieve specific desired features, such as wear resistance, fire-proofing, etc. In all cases however, a sheath material is used, which is relatively expensive and/or difficult to recover, such as polyamide, alkyd varnish and optionally cross-linked polyurethanes. As already mentioned previously, such material combinations are unsuitable, especially for electric cords to be used in household machines.

In EP-A-0,120,382 an electric low voltage cable is described with two concentric sheath layers which may have been extruded over a central conductor. However, this document is only related to sheath material in PVC.

### Detailed description of the invention

In the figure of the drawing a schematical cross-sectional view is shown of a cable according to the invention. The cable is generally denominated as 1 and contains three insulated conductors 2, each comprising a conductor 3, enclosed by an insulation 4. The conductor 3 normally consists of a number of copper wires twisted together. The insulated conductors 2 are enclosed by an inside sheath layer 5 and an outside sheath layer 6. The outside sheath layer 6 is considerably thinner than the inside sheath layer 5, but it should be observed that that the figure of the drawing does not necessarily display the thicknesses of the various layers in the right scale. Moreover, the cable according to the invention may of course comprise more or less than three conductors.

The insulating layer 4 enclosing each of the conductors 3 can consist of a suitable insulating material with good electric properties known in the art, such as various types of rubber or plastic materials. Its composition and dimensions are not critical and are not an essential part of the invention. In one embodiment, however, the insulating layers can be designed with two layers in the same way as the sheath layers and can consist of the same materials as these.

The inside sheath layer 5 should have a good flexibility, good fire retarding properties and a good technical machinability. Moreover, it should be possible to manufacture it at a low cost.

The material of the inside sheath layer 5 consists of at least one halogen-free, flexible and thermoplastic ethylene copolymer containing a silicone rubber or some other silicone-based polymer or oligomer and an inorganic, fire-retarding filler. Other types of polyolefines might also be used, e.g. polyethylene or polypropylene. The sheath consists preferably consists of 1 to 2 percent by weight of silicone rubber, 20 to 50 percent by weight of an inorganic, fire-retarding filler, and the remainder being an ethylene copolymer. The material may also contain small amounts of conventional additives, such as stabilizers, UV-protection agents, colorants, etc. Such additives are well known in the art.

The ethylene copolymer of the inside sheath layer preferably consists of one or several of the copolymers ethylene/acrylic acid, ethylene/butyl acrylate, ethylene/ethyl acrylate, ethylene/methyl acrylate, and/or ethylene/vinyl acetate. Among these, ethylene/butyl acrylate and ethylene/vinyl acetate are preferred.

Silicone rubbers to be used in polymeric compositions are known in the art and consist e.g. of organosiloxane polymers containing siloxyl groups, to which various saturated and unsaturated hydrocarbon groups may be linked. A suitable example is polydimethylsiloxane, but other types of silicone rubber may also be used.

The inorganic, fire-retarding filler may consist of one or several of the materials calcium carbonate, magnesium oxide, magnesium hydroxide, magnesium carbonate, aluminum hydroxide and aluminum trioxide. Of these, calcium carbonate is preferred, especially in the form of chalk, which is cheap and also has advantages from a working point of view, as its resists higher temperatures during working and extrusion of the material. Magnesium and aluminum compounds may also be used, but are more expensive.

A polymer material which has turned out to be advantageous for the inside sheath layer is one sold under the name Borealis 4805 by Borealis A/S, Lyngby, Denmark. This material falls under the scope of the above-mentioned US-A-5,091,453. Other polymeric materials may also be used, however, and may be selected by a person skilled in the art on the basis of the defined specifications.

The outside sheath layer should have a good wear resistance, a good heat resistance and a good technical machinability. Moreover, it can have fire-retarding properties, but this is not absolutely necessary, if the layer is thin.

The outside sheath layer material in a cable according to the invention should be a halogen-free, heat-resistant and wear-resistant, optionally cross-linked thermoplastic polymer on the basis of ethylene and/or propylene. Preferably, this layer consists of polyethylene, polypropylene, or a mixture or a copolymer of these, and/or of one or several copolymers of ethylene/acrylic acid, ethylene/butyl acrylate, ethylen/methyl acrylate and ethylene/vinyl acetate, these materials optionally being cross-linked. The outside layer preferably consists of a non-cross-linked copolymer of ethylene and propylene containing at least 5 percent by weight of propylene, preferably then 5 to 20 percent by weight of propylene, and especially 5 to 10 percent by weight of propylene. The higher contents of propylene provide a harder and more heat-resistant material, but the high hardness might have a negative effect on the flexibility.

Possibly, the outside sheath layer can also contain an inorganic fire-retarding filler, such as one of those previously mentioned. As already previously mentioned, however, this is not necessary if the layer is thin, as in the case of a preferred embodiment. Moreover, the outside sheath layer can also contain small amounts of of conventional additives, as indicated for the inside sheath layer.

To obtain a sufficient wear resistance it is suitable that the polymeric material for the outside sheath layer has a Shore hardness D of at least 43 and preferably between 48 and 52. The thickness of the outside sheath layer can be adapted to the hardness of the material such that a suitable combination of wear resistance and flexibility is obtained.

A number of polymeric materials which are suitably used for the outside sheath layer are already known and are commercially available, such as Borealis FR 4802 and FR 4804 from Borealis A/S, Lyngby, Denmark. These materials fall under the scope of the above mentioned US-A-5,091,453. Other useful materials are those designated DI-4031 from ECC and Megolon S 550 from Lindsay & Williams. The main components of these materials are polyethylene, ethylene copolymers, such as ethylene/vinyl acetate and/or ethylene/butyl acrylate, polypropylene and fire-protecting fillers such as Mg(OH)₂ or Al(OH)₃. Further polymeric materials which may be used are also already known and can be selected by a person skilled in the art.

In a cable according to the invention the inside sheath layer has suitably a thickness of at least 0.6 mm, preferably 0.7 to 0.9 mm at its thinnest place. The outside sheath layer has suitably a thickness of at the most 0.2 mm, preferably 0.05 to 0.1 mm. The outside sheath layer thickness depends on the composition of the layer material such that a harder material should be made thinner to achieve a sufficient flexibility. With a thinner outside layer lower contents or none at all are required of the fire-retarding filler. The stated dimensions relate mostly to cords for electric household machines, which are a preferred em-bodiment of the invention. Other applications may require other dimensions of the layers, as is easily understood in the art.

In a further preferred embodiment, a cable is produced according to the invention by means of coextrusion of the two sheath layers over the insulated conductors. This enables a production of the cable in an economically advantageous way. It is then suitable that the polymeric materials in the two layers are compatible so that a good bonding between the layers is achieved. However, it is also possible to achieve a bonding by means of an intermediate bonding layer with a suitable bonding agent. However, this is less desirable as the production process thereby becomes more complicated and expensive.

As already been mentioned before, the cable according to the invention is especially suitable to be used as a cord for electric household machines. Such cords are often exposed to substantial stresses and here a good flexibility is especially required. An application with the cord according to the invention which has turned out to be very suitable is a cord for a vacuum cleaner. Modern vacuum cleaners are mostly equipped with a cord reel, where the cord is wound and unwound repeatedly each time the vacuum cleaner is used. This results in a heavy wear and flexing of the cord, but these stresses are well endured by the cord according to the invention. As an examples of typical cords, where the invention might be applied here can be mentioned a round and flat vacuum cleaner cord containing two conductors of each 0.75 mm² and the outside dimensions of 6 to 7.6 mm and 3.8x6 to 5.2x7 mm, respectively, and a cord for a refrigerator/freezer containing three conductors of each 0.75 mm² and the outside dimensions of, 6.4 to 8.0 mm, and a cord for a washing or a dishwashing machine, containing three conductors of each 1.5 mm² and the outside dimensions 8.0 to 9.8 mm. The invention is of course not limited to only these applications.

A cord according to the present invention complies well with the requirements of the EU standard IEC 227 and HD 21. The last-mentioned standard is actually related to cables with a PVC insulation, but is well complied with by the halogen-free cables according to the present invention. As an example might be mentioned that the cord according to one of the tests has to be wound around a mandrel and in this state is kept at 150°C for an hour. A cord with a double-layer sheath according to the invention well withstands this test, whereas a cord with only the inside sheath layer does not. This proves that the combination according to the invention is essential to achieve the required performance.

In the description above, various examples have been shown for the choice of material and of design for a cable according to the invention. However, it should be observed that these examples have no limiting meaning whatsoever. For a person skilled in the art, also other embodiments and variations are obvious within the scope of the claims.

## Claims

1. An electric cable (1), comprising at least one electric conductor (3) provided with an insulation (4) and enclosed by a sheath of polymeric material, **characterized in** that the sheath consists of an inside and an outside sheath layer, the inside sheath layer (5) consisting of at least one halogen-free , flexible, thermoplastic ethylene copolymer containing a silicon rubber or another silicone-based polymer or oligomer, and an inorganic, fire-retarding filler, and the outside sheath layer (6) consists of a halogen-free, heat and wear resistant, optionally cross-linked thermoplastic polymer on the basis of ethylene and/or propylene.

2. A cable according to claim 1, **characterized in** that the inside sheath layer (5) contains 1 to 12 percent by weight of a silicone rubber, 20 to 50 percent by weight of an inorganic fire-retarding filler, the remainder being ethylene copolymer.

3. A cable according to claim 1 or 2, **characterized in** that the copolymer of the inside sheath layer (5) consists of one or several of the copolymers of ethylene/acrylic acid, ethylene/butyl acrylate, ethylene/ethyl acrylate, ethylene/methyl acrylate and ethylene/vinyl acetate, preferably then ethylene/butyl acrylate and/or ethylene/vinyl acetate.

4. A cable according to any one of the claims 1 to 3, **characterized in** that the polymer of the outside sheath layer consists of polyethylene, polypropylene or a mixture or a copolymer of these and/or of one or several copolymers of ethylene/acrylic acid, ethylene/butyl acrylate, ethylene/ethyl acrylate, ethylene/methyl acrylate and ethylene/vinyl acetate, these materials optionally being cross-linked.

5. A cable according to claim 4, **characterized in** that the polymer of the outside sheath layer consists of a non-cross-linked copolymer of ethylene and propylene containing at least 5 percent by weight of propylene, preferably 5 to 20 percent by weight, and especially 5 to 10 percent by weight.

6. A cable according to claim 4 or 5, **characterized in** that the outside sheath layer also contains an inorganic fire-retarding filler.

7. A cable according to any one of the claims 1 to 6, **characterized in** that the inorganic fire-retarding filler consists of calcium carbonate, magnesium oxide, magnesium hydroxide, magnesium carbonate, aluminum trioxide or aluminum hydroxide or any mixture of these, and preferably then of calcium carbonate.

8. A cable according to any one of the claims 1 to 7, **characterized in** that the inside sheath layer (5) has a thickness of at least 0.6 mm, preferably 0.7 to 0.9 mm at its thinnest place.

9. A cable according to any one of claims 1 to 8, **characterized in** that the outside sheath layer has a thickness of at the most 0.2 mm, preferably then 0.05 to 0.1 mm.

10. A cable according to any one of claims 1 to 9, **characterized in** that it is produced by means of coextrusion of the two sheath layers (5, 6) over the insulated conductor or conductors (2).

## Patentansprüche

1. Elektrokabel (1), das wenigstens einen elektrischen Leiter (3) umfaßt, der mit einer Isolation (4) versehen ist und von einem Mantel aus Polymermaterialien umhüllt ist,
dadurch gekennzeichnet, daß der Mantel aus einer inneren und einer äußeren Mantelschicht besteht, wobei die innere Mantelschicht (5) aus wenigstens einem halogenfreien, flexiblen, thermoplastischen Ethylen-Copolymer besteht, das einen Silikongummi oder ein weiteres Polymer oder Oligomer auf Silikonbasis sowie einen anorganischen feuerhemmenden Füllstoff enthält, und wobei die äußere Mantelschicht (6) aus einem halogenfreien, wärme- und verschleißfesten, optional vernetzten thermoplastischen Polymer auf der Basis von Ethylen und/oder Propylen besteht.

2. Kabel nach Anspruch 1, dadurch gekennzeichnet, daß die innere Mantelschicht (5) 1-12 Gew.-% eines Silikongummis, 20-50 Gew.-% eines anorganischen feuerhemmenden Füllstoffes und als Rest Ethylen-Copolymer enthält.

3. Kabel nach Anspruch 1 oder 2, dadurch gekennzeichnet, daß das Copolymer der inneren Mantelschicht (5) aus einem oder mehreren der Copolymere Ethylen/Acrylsäure, Ethylen/Butylacrylat, Ethylen/Ethylacrylat, Ethylen/Methylacrylat und Ethylen/Vinylacetat, und vorzugsweise Ethylen/Butylacrylat und/oder Ethylen/Vinylacetat besteht.

4. Kabel nach irgendeinem der Ansprüche 1 bis 3, dadurch gekennzeichnet, daß das Polymer der äußeren Mantelschicht aus Polyethylen, Polypropylen oder einer Mischung oder einem Copolymer hieraus und/oder aus einem oder mehreren Copolymeren von Ethylen/Acrylsäure, Ethylen/Butylacrylat, Ethylen/Ethylacrylat, Ethylen/Methylacrylat und Ethylen/Vinylacetat besteht, wobei diese Materialien optional vernetzt sind.

5. Kabel nach Anspruch 4, dadurch gekennzeichnet, daß das Polymer der äußeren Mantelschicht aus einem nicht vernetzten Copolymer von Ethylen und Propylen besteht, das wenigstens 5 Gew.-%, vorzugsweise 5 bis 20 Gew.-% und höchstvorzugsweise 5 bis 10 Gew.-% Propylen enthält.

6. Kabel nach Anspruch 4 oder 5, dadurch gekennzeichnet, daß die äußere Mantelschicht ferner einen anorganischen feuerhemmenden Füllstoff enthält.

7. Kabel nach irgendeinem der Ansprüche 1 bis 6, dadurch gekennzeichnet, daß der anorganische feuerhemmende Füllstoff aus Calciumcarbonat, Magnesiumoxid, Magnesiumhydroxid, Magnesiumcarbonat, Aluminiumtrioxid oder Aluminiumhydroxid oder irgendeiner Mischung hieraus, und vorzugsweise aus Calciumcarbonat besteht.

8. Kabel nach irgendeinem der Ansprüche 1 bis 7, dadurch gekennzeichnet, daß die innere Mantelschicht (5) an ihrer dünnsten Stelle eine Dicke von wenigstens 0,6 mm, vorzugsweise 0,7 bis 0,9 mm aufweist.

9. Kabel nach irgendeinem der Ansprüche 1 bis 8, dadurch gekennzeichnet, daß die äußere Mantelschicht eine Dicke von höchstens 0,2 mm, vorzugsweise 0,05 bis 0,1 mm aufweist.

10. Kabel nach irgendeinem der Ansprüche 1 bis 9, dadurch gekennzeichnet, daß es mittels Koextrusion der zwei Mantelschichten (5, 6) über dem isolierten Leiter oder den Leitern (2) hergestellt wird.

## Revendications

1. Câble électrique (1), comportant au moins un conducteur électrique (3) muni d'un isolant (4) et entouré d'une gaine en matériau polymère, **caractérisé en ce que** la gaine est constituée de couches de gaine intérieure et extérieure, la couche de gaine intérieure (5) étant constituée d'au moins un copolymère d'éthylène thermoplastique, flexible, sans halogène, contenant un caoutchouc au silicone ou un autre polymère ou oligomère basé sur le silicone, et une charge inorganique retardant la combustion, et la couche de gaine extérieure (6) étant constituée d'un polymère thermoplastique éventuellement réticulé, résistant à la chaleur et à l'usure, sans halogène, basé sur l'éthylène et /ou le propylène.

2. Câble selon la revendication 1, **caractérisé en ce que** la couche de gaine intérieure (5) contient 1 à 12 % en poids de caoutchouc au silicone, 20 à 50 % en poids d'une charge inorganique retardatrice de combustion, le reste étant un copolymère d'éthylène.

3. Câble selon la revendication 1 ou 2, **caractérisé en ce que** le copolymère de la couche de gaine intérieure (5) est constitué d'un ou de plusieurs copolymères, parmi l'acide éthylène / acrylique, l'acrylate d'éthylène / butyle, l'acrylate d'éthylène / éthyle, l'acrylate d'éthylène / méthyle et l'acétate d'éthylène / vinyle, de préférence l'acrylate d'éthylène / butyle et / ou l'acétate d'éthylène / vinyle.

4. Câble selon une quelconque des revendications 1 à 3, **caractérisé en ce que** le polymère de la couche de gaine extérieure est constitué de polyéthylène, de polypropylène ou d'un mélange d'un copolymère de ceux-ci et / ou d'un ou de plusieurs copolymères parmi l'acide éthylène / acrylique, l'acrylate d'éthylène / butyle, l'acrylate d'éthylène / éthyle, l'acrylate d'éthylène / méthyle et l'acétate d'éthylène / vinyle, ces matériaux étant éventuellement réticulés.

5. Câble selon la revendication 4, **caractérisé en ce que** le polymère de la couche de gaine extérieure est constitué d'un copolymère non réticulé d'éthylène et de propylène contenant au moins 5 % en poids de propylène, de préférence 5 à 20 % en poids et spécialement 5 à 10 % en poids.

6. Câble selon les revendications 4 ou 5, **caractérisé en ce que** la couche de gaine extérieure contient également une charge inorganique retardant la combustion.

7. Câble selon une quelconque des revendications 1 à 6, **caractérisé en ce que** la charge inorganique retardant la combustion est constituée de carbonate de calcium, d'oxyde de magnésium, d'hydroxyde de magnésium, de carbonate de magnésium, de trioxyde d'aluminium ou d'hydroxyde d'aluminium ou d'un mélange quelconque de ceux-ci, et de préférence de carbonate de calcium.

8. Câble selon une quelconque des revendications 1 à 7, **caractérisé en ce que** la couche de gaine intérieure (5) possède une épaisseur d'au moins 0,6 mm, de préférence 0,7 à 0,9 mm à l'endroit le plus mince.

9. Câble selon une quelconque des revendications 1 à 8, **caractérisé en ce que** la couche de gaine extérieure possède une épaisseur d'au plus 0,2 mm, de préférence 0,05 à 0,1 mm.

10. Câble selon une quelconque des revendications 1 à 9, **caractérisé en ce qu'**il est produit au moyen d'une co-extrusion des deux couches de gaine (5, 6) par-dessus le ou les conducteurs isolés (2).
